# FASCICULE DE BREVET EUROPEEN

(11) **EP 0 834 975 B1**
(45) Date de publication et mention de la délivrance du brevet: **23.07.2003**
(21) Numéro de dépôt: 97410107.3
(22) Date de dépôt: 30.09.1997
(51) Int. Cl.: H02H 3/02, H01H 71/10

(54) **Dispositif de distribution électrique terminale à bloc limiteur hybride**
Elektrisches Verteilungsanschlusselement mit hybridem Begrenzerblock
Electrical distribution terminal with hybrid limiter block

(30) Priorité: 01.10.1996 FR 9612154
(43) Date de publication de la demande: 08.04.1998
(73) Titulaire: Schneider Electric Industries SAS, 92500 Rueil-Malmaison (FR)
(72) Inventeur: Bernard, Georges, 38050 Grenoble, cedex 09 (FR); Gufflet, Didier, 38050 Grenoble, cedex 09 (FR); Petit, Pascale, 38050 Grenoble, cedex 09 (FR); Chapusot, Alain, 38050 Grenoble, cedex 09 (FR); Privet, Pascal, 38050 Grenoble, cedex 09 (FR); Lauraire, Michel, 38050 Grenoble, cedex 09 (FR)
(74) Mandataire: Ritzenthaler, Jacques

(56) Documents cités:
- EP-A- 0 074 186
- EP-A- 0 096 601
- FR-A- 2 365 229

## Description

L'invention est relative à un dispositif de distribution sélective terminale à basse tension, comportant un circuit électrique renfermant un bloc limiteur de courant inséré électriquement dans l'arrivée commune entre un disjoncteur d'alimentation, et une pluralité de départs protégés chacun par un disjoncteur divisionnaire, ledit bloc limiteur comprenant un interrupteur à contact mécanique commandé par un actionneur vers l'état ouvert lorsque le courant dépasse un seuil IS prédéterminé, et un composant à résistance dépendant de la tension, connecté en parallèle aux bornes de l'interrupteur.

Le document FR-A-2606 929 se rapporte à un interrupteur ayant un circuit limiteur de courant constitué par un interrupteur à ouverture et fermeture automatique, en parallèle sur une varistance à ZnO. La commutation du courant dans la varistance est très rapide, et la séquence de coupure est couplée avec l'usage de thermistance à CTP. La mise en oeuvre d'un tel circuit limiteur dans une installation de distribution terminale sélective à plusieurs départs est compliquée.

Le document FR-A-2 531 581 concerne un tableau de distribution terminale comprenant un interrupteur limiteur dont la séquence de fonctionnement nécessite des disjoncteurs divisionnaires ayant chacun un pouvoir de coupure relativement élevé.

Le document EP0074186 décrit un dispositif limiteur de courant comprenant un élément limiteur de courant, qui est connecté en série avec un élément de commutation, l'ensemble étant connecté en parallèle aux bornes d'une première réactance. En parallèle sur l'élément limiteur de courant est reliée une deuxième impédance connectée en série avec un transformateur de courant. Deux bobines d'excitation, comprenant une bobine de déclenchement et une bobine de fermeture, sont pilotées par le transformateur de courant à travers un détecteur de courant pour actionner respectivement l'ouverture et la fermeture de l'élément de commutation. La fermeture intervient après l'intervention de moyens de temporisation commandés par le détecteur de courant.

L'objet de l'invention consiste à réaliser un dispositif de distribution terminale à bloc limiteur hybride de conception simple et bon marché, susceptible d'assurer la sélectivité de déclenchement.

Le dispositif de distribution sélective selon l'invention est caractérisé en ce que
- le bloc limiteur comporte de plus des moyens de temporisation rendus actifs lors de la commutation du courant dans ledit composant, et agencés pour maintenir l'interrupteur dans l'état ouvert pendant une durée minimum de 10 millisecondes, indépendamment de l'intensité du courant de court-circuit, la refermeture de l'interrupteur étant opérée après élimination préalable du courant de fuite par le disjoncteur divisionnaire du départ en défaut,
- l'actionneur à commande électromagnétique ou électrodynamique, est branché électriquement en série avec l'interrupteur,
- le composant à résistance dépendant de la tension est formé par une varistance.

Selon une caractéristique de l'invention, les moyens de temporisation comportent un retardateur mécanique destiné à retenir le contact mobile de l'interrupteur dans l'état ouvert pendant ladite durée d'inhibition de la refermeture.

Selon une autre caractéristique de l'invention, les moyens de temporisation sont formés par un retardateur électromagnétique connecté en parallèle aux bornes du composant à résistance dépendant de la tension. Le retardateur électromagnétique comporte un électro-aimant de commande branché en série avec une résistance, de manière à être parcouru par un courant dérivé après la commutation du courant dans ledit composant, et jusqu'à l'élimination du courant de fuite par le disjoncteur divisionnaire.

Une telle séquence de coupure permet d'utiliser des disjoncteurs divisionnaires équipés d'un simple déclencheur thermique.

D'autres avantages et caractéristiques ressortiront plus clairement de la description qui va suivre d'un mode de réalisation de l'invention, donné à titre d'exemple non limitatif, et représenté aux dessins annexés dans lesquels:
- La figure 1 montre le circuit électrique unipolaire d'une installation de distribution terminale à bloc limiteur hybride selon l'invention;
- Les figures 2A et 2B représentent les diagrammes de fonctionnement de l'installation de la figure 1, en cas d'apparition sur le départ a d'un courant de court-circuit respectivement de faible intensité et de forte intensité;
- La figure 3 est une vue schématique du bloc limiteur selon l'invention, la varistance n'étant pas représentée;
- La figure 4 est une vue similaire de la figure 1, les moyens de temporisation étant constitués par un retardateur électromagnétique.

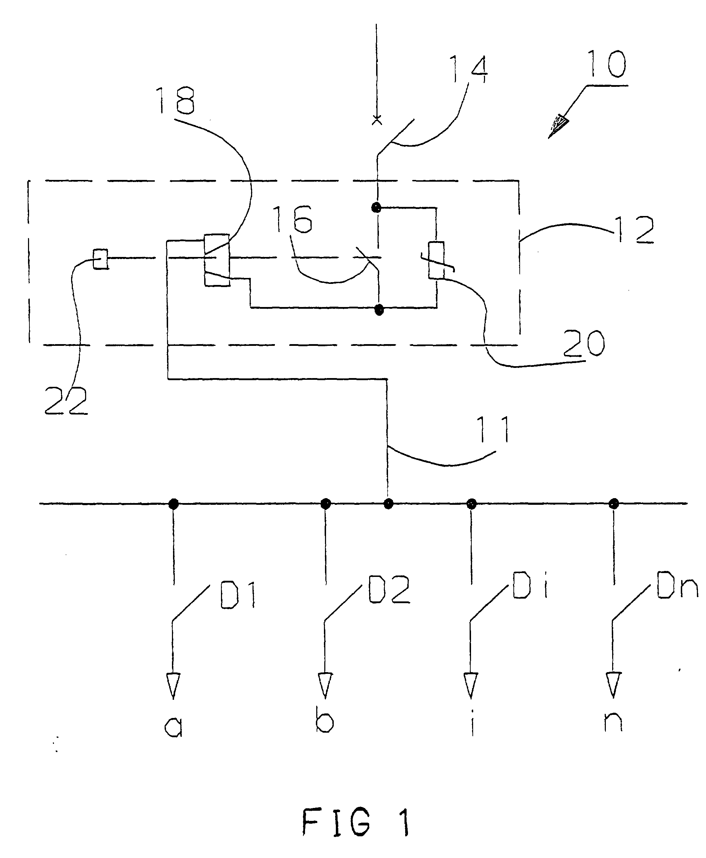

Sur la figure 1, un dispositif de distribution 10 terminale à basse tension possède un circuit électrique 11 comportant un bloc limiteur de courant 12, inséré dans un tableau électrique entre le disjoncteur d'abonné 14 placé en amont, et les différents départs a,b,c,i,...n en dérivation, protégés chacun par un disjoncteur divisionnaire D1, D2,...Dn.

Le bloc limiteur de courant 12 est formé par un interrupteur 16 à ouverture et fermeture automatique coopérant avec un actionneur rapide 18 à commande électromagnétique ou électrodynamique. L'interrupteur 16 comprend un contact mécanique branché électriquement en série avec le disjoncteur d'abonné 14, et l'actionneur 18, ledit contact étant susceptible de se trouver dans un état ouvert ou dans état fermé lorsque l'actionneur 18 est respectivement dans une position active ou une position inactive en fonction de l'intensité du courant traversant le bloc limiteur 12.

Une varistance 20 à Zn0 ou tout autre composant à résistance dépendant de la tension, est connectée en parallèle aux bornes de l'interrupteur 16, pour constituer un ensemble limiteur de courant hybride. Des moyens de temporisation 22 sont associés à l'actionneur 16 pour assurer un calibrage du temps de refermeture de l'interrupteur 16.

Le bloc limiteur de courant 12 assure une limitation d'un courant de court-circuit, et éventuellement la coupure du circuit électrique 11, tant que le disjoncteur divisionnaire D1, D2, Dn en tête du départ en défaut n'a pas déclenché. Le bloc limiteur 12 se referme ensuite automatiquement après l'interruption du défaut, et assure la continuité de service sur les autres départs, dont les disjoncteurs correspondants sont restés en position de fermeture.

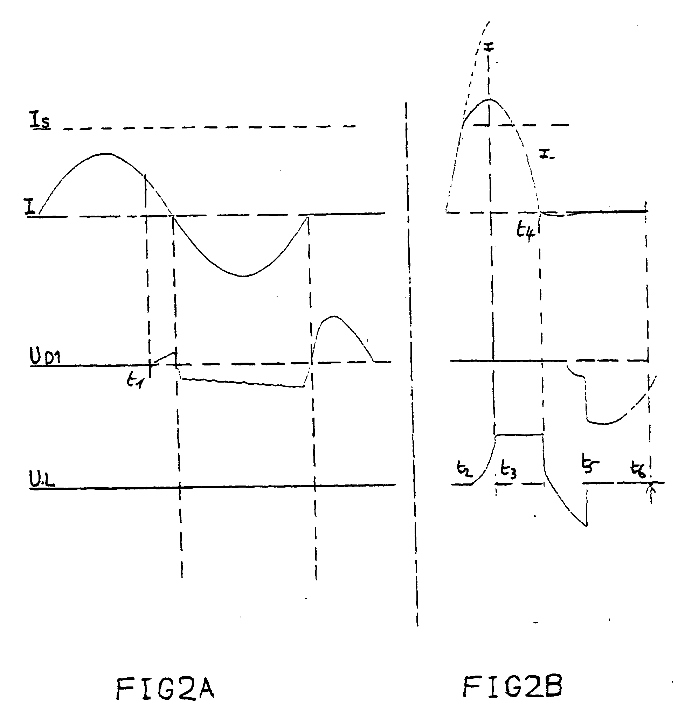

Le bloc limiteur de courant 12 est parfaitement endurant pour des séquences de coupure, dont les diagrammes de fonctionnement sont illustrés sur les figures 2A et 2B, et correspondant à un défaut apparaissant à titre d'exemple sur le départ a.

En référence à la figure 2A, la valeur crête du courant de défaut I alternatif dans le circuit 11 est inférieure au seuil IS d'intervention de l'actionneur 18, lequel reste en position inactive. Ce faible courant de court-circuit est éliminé par l'ouverture au temps t1 du disjoncteur divisionnaire D1, qui assure seul la coupure du défaut. L'interrupteur 16 du bloc limiteur 12 reste immobilisé dans l'état fermé, et permet la continuité de service des autres départs b,c,i,n. La courbe UD1 représente la tension aux bornes du disjoncteur divisionnaire D1, et la tension UL aux bornes de l'interrupteur 16 reste nulle pendant la phase inactive de l'actionneur 18.

En cas de fort courant de défaut I (figure 2B) dépassant le seuil IS, l'actionneur 18 passe en position active, et entraîne l'interrupteur 16 à l'instant t2 vers l'état ouvert. L'apparition d'un arc électrique entre les contacts de l'interrupteur 16 provoque une limitation du courant de court-circuit, et une montée de la tension d'arc UL aux bornes de l'interrupteur 16 pendant un intervalle de temps t2-t3. A un seuil prédéterminé de la tension d'arc atteint à l'instant t3, s'opère la commutation du courant limité dans la varistance 20, laquelle absorbe la majorité de l'énergie jusqu'à la fin de la phase de coupure. Au passage du courant à zéro intervenant à l'instant t4, la tension du réseau se retrouve aux bornes de l'interrupteur 16, et la varistance 20 est traversée par un courant de fuite de faible intensité, qui sera coupé automatiquement par le disjoncteur divisionnaire D1 au temps t5. L'actionneur 18 revient ensuite vers la position inactive.Suite à l'intervention des moyens de temporisation 22 l'interrupteur 16 se referme au temps t6, de manière à assurer la continuité de service des autres départs b,i,..n.

Les moyens de temporisation 22 sont rendus actifs lors de la commutation du courant dans la varistance 20, et agencés pour maintenir l'interrupteur 16 dans l'état ouvert pendant une durée minimum de 10ms à 20ms à partir de l'instant d'ouverture t2, indépendamment de l'intensité du courant de défaut I.
La durée de l'arc est très courte, de l'ordre de quelques millisecondes, et l'interrupteur 16 doit supporter une faible énergie, avant la commutation du courant dans la varistance 20, laquelle absorbe la majorité de l'énergie pendant l'intervalle de temps t3 à t5. Le calibrage du temps de refermeture de l'interrupteur 16 est suffisant pour autoriser l'élimination préalable du faible courant de fuite traversant la varistance 20 du bloc limiteur 10 par le disjoncteur divisionnaire D1.

Les disjoncteurs divisionnaires D1 à Dn peuvent être constitués par des disjoncteurs miniatures à faible pouvoir de coupure, comprenant un simple déclencheur thermique à bilame, et une paire de contacts associée à des cornes d'arc en guise de chambre d'extinction d'arc.

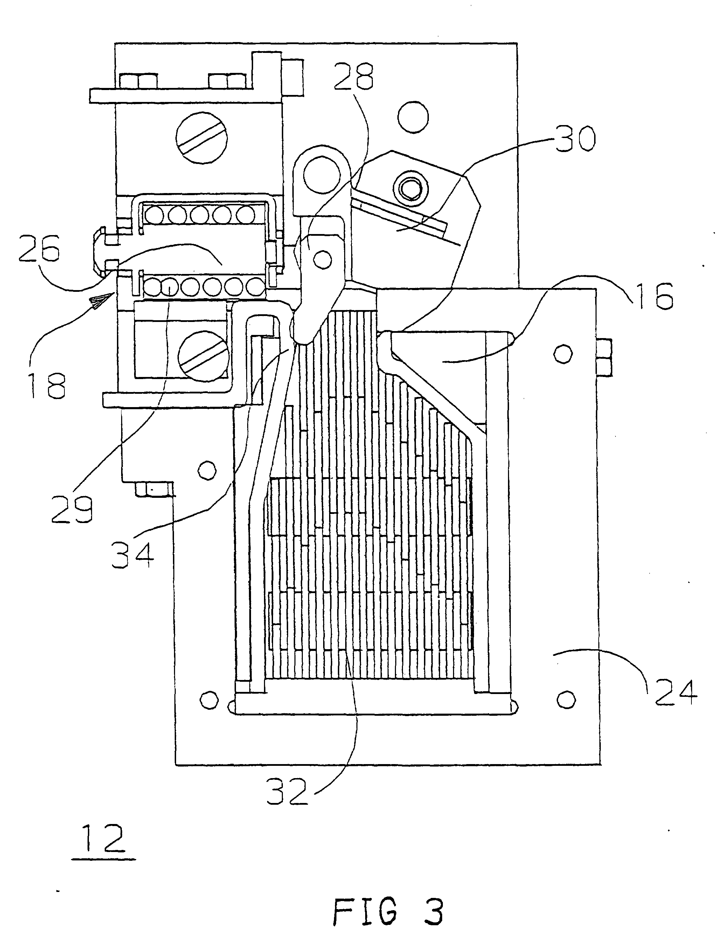

En référence à la figure 3, le bloc limiteur de courant 12 est logé dans un boîtier 24 isolant renfermant un actionneur 18 du type électromagnétique ayant un noyau magnétique mobile 26 destiné à propulser le contact mobile 28 de l'interrupteur 16 vers l'état ouvert lorsque le courant traversant la bobine 29 d'excitation de l'actionneur 18 dépasse le seuil IS. Le contact mobile 28 est maintenu en position d'ouverture par les moyens de temporisation formés à titre d'exemple par un retardateur mécanique 30, notamment à masselotte. Une chambre de coupure 32 à tôles de désionisation est prévue pour l'extinction de l'arc tiré entre le contact mobile 28 et le contact fixe 34 lors de l'ouverture de l'interrupteur 16.

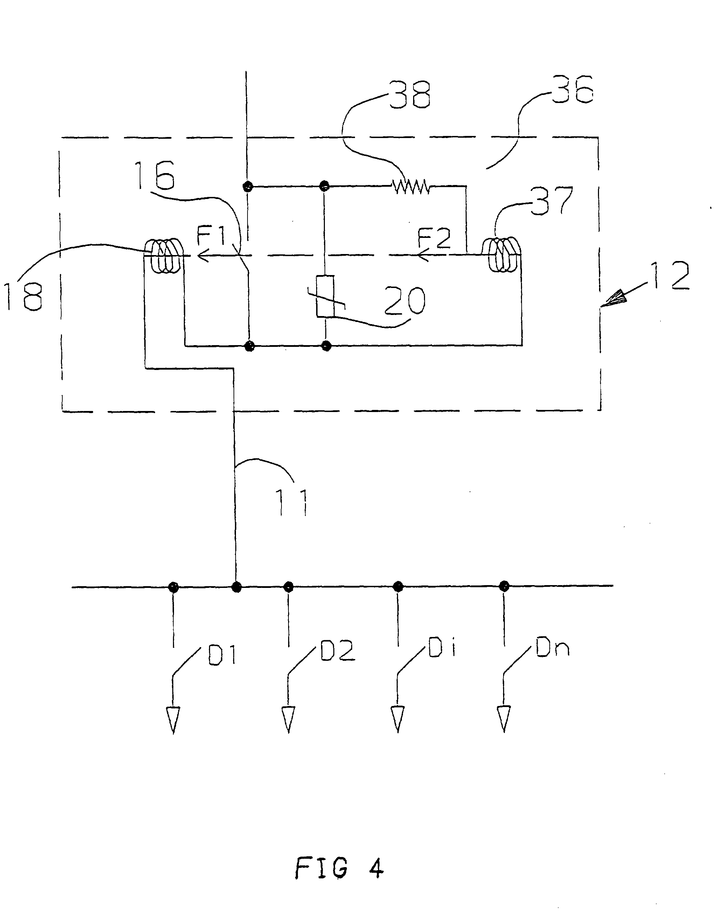

Sur la figure 4, les moyens de temporisation comportent un retardateur électromagnétique 36 connecté électriquement en parallèle aux bornes de la varistance 20. Le retardateur électromagnétique 36 est doté d'un électro-aimant 37 de commande branché en série avec une résistance 38 de limitation du courant d'excitation de la bobine de l'électro-aimant 37. La flèche F2 représente le sens d'intervention de l'actionneur 18 sur le contact mobile de l'interrupteur 16 lors du passage de l'actionneur vers la position active. Après la commutation du courant du circuit 11 dans la varistance 20, un courant dérivé circule dans le circuit shunt du retardateur électromagnétique 36 pour faire agir l'électroaimant 37 dans le sens de la flèche F2, de manière à maintenir l'interrupteur 16 ouvert pendant la durée de la temporisation laquelle est définie par le passage de courant.

Il est clair que l'actionneur 18 et l'électro-aimant 37 du retardateur électromagnétique 36 peuvent être combinés sur un circuit magnétique commun à double bobinage d'excitation. L'actionneur 18 électromagnétique de la figure 3 peut, bien entendu, être remplacé par un actionneur électrodynamique mettant en oeuvre des forces d'actionnement de répulsion ou d'attraction.

## Revendications

1. Dispositif de distribution (10) sélective terminale à basse tension, comportant :
- un circuit électrique (11) renfermant un bloc limiteur de courant (12) inséré électriquement dans l'arrivée commune entre un disjoncteur d'alimentation (14),
- et une pluralité de départs (a,b,i,...n) protégés chacun par un disjoncteur divisionnaire (D1, D2, Di,...Dn), ledit bloc limiteur comprenant un interrupteur (16) à contact mécanique commandé par un actionneur (18) vers l'état ouvert lorsque le courant dépasse un seuil IS prédéterminé, et un composant à résistance dépendant de la tension, connecté en parallèle aux bornes de l'interrupteur (16),
**caractérisé en ce que**
- le bloc limiteur (12) comporte de plus des moyens de temporisation (22) rendus actifs lors de la commutation du courant dans ledit composant, et agencés pour maintenir l'interrupteur (16) dans l'état ouvert pendant une durée minimum de 10 millisecondes, indépendamment de l'intensité du courant de court-circuit, la refermeture de l'interrupteur (16) étant opérée après élimination préalable du courant de fuite par le disjoncteur divisionnaire du départ en défaut,
- l'actionneur (18) à commande électromagnétique ou électrodynamique, est branché électriquement en série avec l'interrupteur (16),
- le composant à résistance dépendant de la tension est formé par une varistance (20).

2. Dispositif de distribution selon la revendication 1, **caractérisé en ce que** les moyens de temporisation (22) comportent un retardateur mécanique (30) destiné à retenir le contact mobile (28) de l'interrupteur (16) dans l'état ouvert pendant ladite durée d'inhibition de la refermeture.

3. Dispositif de distribution selon la revendication 1, **caractérisé en ce que** les moyens de temporisation (22) sont formés par un retardateur électromagnétique (36) connecté en parallèle aux bornes du composant à résistance dépendant de la tension.

4. Dispositif de distribution selon la revendication 1, **caractérisé en ce que** le retardateur électromagnétique (36) comporte un électro-aimant (37) de commande branchée en série avec une résistance (38), de manière à être parcouru par un courant dérivé après la commutation du courant dans ledit composant, et jusqu'à l'élimination du courant de fuite par le disjoncteur divisionnaire.

5. Dispositif de distribution selon la revendication 4, **caractérisé en ce que** l'actionneur (18) et l'électro-aimant (37) du retardateur électromagnétique (36) sont combinés sur un circuit magnétique commun à double bobinage d'excitation.

## Patentansprüche

1. Selektive Niederspannungs-Endverteileranordnung (10), die
- einen Stromkreis (11) mit einem Strombegrenzerblock (12) umfaßt, welcher in den gemeinsamen Eingangszweig zwischen einen Einspeiseleistungsschalter (14) und
- mehrere, durch jeweils einen Abgangsleistungsschalter (D1, D2, Di,... Dn) geschützte Abgänge (a, b, i, ... n) geschaltet ist, wobei der genannte Strombegrenzerblock einen Schalter (16) mit mechanischem Kontakt, welcher durch ein Betätigungsorgan (18) in Richtung seiner Ausschaltstellung beaufschlagt wird, wenn der Strom einen festgelegten Schwellwert IS überschreitet, sowie ein parallel zu den Klemmen des Schalters (16) geschaltetes Schaltungselement mit spannungsabhängigem Widerstand umfaßt,
**dadurch gekennzeichnet, daß**
- der Strombegrenzerblock (12) zusätzlich Zeitverzögerungsmittel (22) umfaßt, die bei der Umschaltung des Stroms auf das genannte Schaltungselement aktiviert werden und so ausgelegt sind, daß sie den Schalter (16) unabhängig von der Höhe des Kurzschlußstroms über eine Mindestzeitspanne von 10 Millisekunden in der Ausschaltstellung halten, wobei die Wiedereinschaltung des Schalters (16) nach vorheriger Abschaltung des Fehlerstroms durch den Abgangsleistungsschalter des fehlerbehafteten Abgangs erfolgt,
- das elektromagnetische bzw. elektrodynamische Betätigungsorgan (18) mit dem Schalter (16) in Reihe geschaltet ist,
- das Schaltungselement mit spannungsabhängigem Widerstand als Varistor (20) ausgebildet ist.

2. Verteileranordnung nach Anspruch 1, **dadurch gekennzeichnet, daß** die Zeitverzögerungsmittel (22) einen mechanischen Verzögerer (30) umfassen, der dazu dient, den beweglichen Kontakt (28) des Schalters (16) während der genannten Wiedereinschalt-Sperrzeit in der Ausschaltstellung zu halten.

3. Verteileranordnung nach Anspruch 1, **dadurch gekennzeichnet, daß** die Zeitverzögerungsmittel (22) als elektromagnetischer Verzögerer (36) ausgebildet sind, der parallel zu den Klemmen des Schaltungselements mit spannungsabhängigem Widerstand geschaltet ist.

4. Verteileranordnung nach Anspruch 1, **dadurch gekennzeichnet, daß** der elektromagnetische Verzögerer (36) einen Steuerungs-Elektromagneten (37) umfaßt, der mit einem Widerstand (38) in Reihe geschaltet ist, derart daß der Elektromagnet nach Umschaltung des Stroms auf das genannte Schaltungselement von einem Parallelstrom durchflossen wird, bis die Abschaltung des Fehlerstroms durch den betreffenden Abgangsleistungsschalter erfolgt.

5. Verteileranordnung nach Anspruch 4, **dadurch gekennzeichnet, daß** das Betätigungsorgan (18) und der Elektromagnet (37) des elektromagnetischen Verzögerers (36) zu einem gemeinsamen Magnetkreis mit Doppel-Erregerspule zusammengefaßt sind.

## Claims

1. A selective low-voltage terminal distribution device (10) comprising:
- an electrical circuit (11) incorporating a current limiting unit (12) electrically inserted in the common incomer between a supply circuit breaker (14),
- and a plurality of feeders (a,b,i,...n) each protected by a branch circuit breaker D1, D2, Di,...Dn), said limiting unit comprising a switch (16) with a mechanical contact actuated by an actuator (18) to the open state when the current exceeds a preset threshold IS, and a voltage-dependent resistance component connected in parallel to the terminals of the switch (16),
**characterized in that**
- the limiting unit (12) in addition comprises time delay means (22) rendered active when switching of the current to said component takes place, and arranged to keep the switch (16) in the open state for a minimum time of 10 milliseconds, regardless of the intensity of the short-circuit current, reclosing of the switch (16) being performed after the leakage current has previously been cleared by the branch circuit breaker of the feeder at fault,
- the actuator (18) with electromagnetic or electrodynamic control is electrically connected in series with the switch (16),
- the voltage-dependent resistance component is formed by a voltage-dependent resistor (20).

2. Distribution device according to claim 1, **characterized in that** the time delay means (22) comprise a mechanical delay device (30) designed to keep the movable contact (28) of the switch (16) in the open state during said reclosing disable time.

3. Distribution device according to claim 1, **characterized in that** the time delay means (22) are formed by an electromagnetic delay device (36) connected in parallel to the terminals of the voltage-dependent resistance component.

4. Distribution device according to claim 1, **characterized in that** the electromagnetic delay device (36) comprises an operating electromagnet (37) connected in series with a resistor (38), in such a way that a branched current flows therethrough after the current has been switched to said component, until the leakage current is cleared by the branch circuit breaker.

5. Distribution device according to claim 4, **characterized in that** the actuator (18) and the electromagnet (37) of the electromagnetic delay device (36) are combined on a common magnetic circuit with twin excitation coils.
